# EUROPEAN PATENT SPECIFICATION

(11) **EP 1 647 733 B1**
(45) Date of publication and mention of the grant of the patent: **03.06.2009**
(21) Application number: 05256236.0
(22) Date of filing: 05.10.2005
(51) Int. Cl.: F16D 55/224, F16D 55/36, F16D 65/095

(54) **Brake pad**
Bremsbelag
Patin de frein

(30) Priority: 15.10.2004 GB 0422909
(43) Date of publication of application: 19.04.2006
(73) Proprietor: Delphi Technologies, Inc., Troy, MI 48007 (US)
(72) Inventor: Challenor, Adam, Daventry NN1 5WN (GB)
(74) Representative: Denton, Michael John

(56) References cited:
- WO-A-98/25804
- US-A- 5 551 537

## Description

### Technical Field

The present invention relates to disc brakes and more specifically to a brake pad for a disc brake. In particular it relates to a mounting arrangement for a brake pad in a disc brake. Moreover it relates to a brake pad, and brake pad mounting arrangement, for a spot type disc brake which has multiple axially slidable discs, and especially to a brake pad disposed between two discs and which has friction lining material on opposite sides of the brake pad that in use engage the respective discs.

### Background of the Invention

In conventional disc brakes, it is known to provide a brake pad comprising a backing plate with friction lining material on one side. Such brake pads are commonly used in disc brakes, especially for motor vehicles. The friction lining material of a pair of brake pads is positioned on opposed sides of a rotatable disc, and the material is engageable with the disc to provide braking. Typically there is a single axially fixed disc with brake pads which engage either axial side of the disc.

In a modification of the above arrangement the disc brake has a pair (or more) of discs which are axially spaced apart along and rotatable on a hub about a common axis. At least one of the discs is axially slidable on the hub along the common axis. In this arrangement there is a centre double sided brake pad positioned between the rotatable discs and having friction lining material on opposed sides. Further brake pads having friction material on only one side act on the axial end faces of the respective discs. In use, a brake actuator, typically a piston and cylinder assembly, operates to move and press the pads axially against the discs causing the pads to slide axially along a caliper bridge (otherwise known as a torque carrier), and the discs to similarly slide axially along the common axis until each disc is frictionally engaged on both sides by the brake pads to apply a braking force and torque to the discs.

The brake pads are mounted on the caliper bridge (torque carrier) so as to resist and react the resultant frictional forces and rotational torque generated on the pads by their fictional engagement with the rotating discs during braking. The bridge forms part of a caliper assembly of the disc brake with the bridge located radially outward of the discs and bridging the outer edges of the discs. Whilst one of the brake pads may be fixed to the bridge, the remaining pads, and in particular generally the centre brake pad, are axially slidably mounted upon the bridge.

The mounting of the brake pads on the caliper is particularly important in order to achieve adequate and acceptable operation of the brake, and yet is particularly problematic and difficult. Firstly the mounting must adequately resist and react the forces applied in use to the brake pad, whilst at the same time allowing axial sliding of the brake pads. Secondly the brake pads must be kept in the correct operating position, and in particular parallel to the disc surfaces both radially and circumferentially in order to reduce vibration, and nosie, ensure correct operation as well as prevent uneven wear of the friction lining material. In disc brakes with axially sliding, usually multiple, discs the stable mounting of the brake pads is even more important and critical since in such disc brakes the pads control and affect the sliding and orientation of the typically multiple discs. However in such brakes the mounting of the brake pads is even more difficult since the pads must be free to slide over a greater axial distance, and access to mount the brake pads, and in particular the centre pads located between discs is restricted. Indeed considerable work has been carried out to develop different arrangements for mounting of the brake pads in such disc brakes with axially slidable brakes.

Various prior brake pad mounting proposals for disc brakes with axially sliding discs are described, for example, in WO98/25804, WO 98/26191, WO 00/42332, WO 00/09900, and WO 02/48567. Whilst such prior pad mounting arrangements function adequately and address some of the above problems and concerns they can be improved. In particular improvements can be made in terms of the stability of the mounting of the brake pads and ensuring that the brake pads are, in use, maintained in the correct optimum positions.

US 5,551,537, see preamble of claim 1, describes a mounting arrangement for a brake pad in a single axially fixed disc brake in which the braking forces on the pad are balanced and resisted through rounded mounting abutments at each lateral end of the pad. This arrangement is however unsuitable for an axially sliding disc brake and furthermore can be improved.

It is therefore desirable to provide an improved brake pad mounting arrangement which addresses the above problems and concerns and/or provides an improved brake pad mounting arrangement which offers improvements generally.

### Summary of the Invention

According to the present invention there is provided a brake pad as described in the accompanying claims. There is also provided a disc brake assembly including such a brake pad as further described in the accompanying claims.

In a first aspect of an embodiment of the invention there is provided a disc brake comprising a rotatable disc, at least a pair of brake pads, and a fixed brake pad mounting. The pair of brake pads are arranged to, in use, frictionally engage opposite sides of the disc and generate a braking torque on the disc. At least one of the pair of brake pads has first and second abutment surfaces disposed toward opposite respective ends of the brake pad for mounting the brake pad. The fixed brake pad mounting is located radially outward of the discs and bridging the outer edges of the discs and upon which at least one of the brake pads is mounted. The fixed brake pad mounting comprises first and second fixed brake pad mounting abutment surfaces against which the first and second abutment surfaces of the brake pad abut to, in use, react a braking torque acting on the brake pad generated during braking of the rotatable disc. The first and second abutment mounting surfaces of the brake pad face in the same direction such that, in use, they both react the braking torque generated during braking of the rotatable disc rotating in a first direction. The brake pad has a neutral moment axis on which the braking torque on the brake pad can be resolved with no rotating moment on the pad. The first abutment surface is centered above the neutral moment axis and the second mounting abutment surface is centered below the neutral moment axis.

The combined mounting of the brake pad at either end, and reacting and resisting the braking torque at each end, in combination with reacting and resisting the braking torque both above and below the neutral axis provides a more stable mounting of the brake pad. This reduces noise, pad wear and ensures correct positioning of the pad, in particular the centre pad, and improves control and operation of the brake.

The first and second abutment surfaces of the brake pad preferably face in the first direction of rotation. The first abutment surface of the pad is preferably located towards the trailing end of the brake pad and the second abutment surface of the pad is preferably located towards the leading end of the pad. The leading and trailing ends of the pad relating to the direction of rotation of the disc.

The pad preferably has a first arm which extends from the end of the pad and has a distal hook end which defines the second abutment surface.

The brake pad may further comprise a third abutment surface facing in the opposite direction to the first and second abutment surfaces. The fixed brake pad mounting may also further comprise a third fixed brake pad mounting abutment surface against which the third abutment surface of the brake pad abuts to in use react a braking torque acting on the brake pad generated during braking of the rotatable disc rotating in a second direction opposite to the first direction. The third abutment surface of the pad is preferably located towards the leading end of the brake pad. The brake pad may also further comprise a fourth abutment surface facing in the same direction as third abutment surface. The fixed brake pad mounting further may then also further comprise a fourth fixed brake pad mounting abutment surface against which the fourth abutment surface of the brake pad abuts to, in use, react the braking torque acting on the brake pad. In such a case the third abutment surface is preferably then centered above the neutral moment axis and the fourth abutment surface is centered below the neutral moment axis. Furthermore the pad may then have a second arm which extends from the end of the pad and has a distal hook end which defines the fourth abutment surface.

The fixed pad mounting and brake pad are preferably adapted such that, in use, the braking torque reacted by the first and second abutment surfaces is shared between the first and second abutment surfaces. Furthermore the fixed pad mounting and brake pad may be adapted such that in use the braking torque is initially predominantly reacted by the second abutment surface of the pad and second fixed mounting abutment surface.

In a second aspect of an embodiment of the invention there is provided a brake pad for a disc brake. The brake pad has first and second abutment surfaces disposed toward opposite respective ends of the brake pad for mounting the brake pad in the disc brake and, in use, reacting a braking torque acting on the brake pad. The first and second abutment mounting surfaces of the brake pad face in the same direction and are adapted to, in use, both react a braking torque generated during braking of a disc of the disc brake rotating in a first direction. The brake pad also has a neutral moment axis on which the braking torque on the brake pad can be resolved with no rotating moment on the pad. The first abutment surface is centered above the neutral moment axis and the second mounting abutment surface is centered below the neutral moment axis.

In another aspect of a particular embodiment of the invention there is provided a brake pad comprising a backing plate having friction lining material on one side thereof and friction lining material on the other side thereof; wherein the backing plate has a first arm extending outwardly from one edge of the backing plate; and a second arm extending outwardly from the other edge of the backing plate; wherein the first arm has an abutment surface directed away from the one edge and which is located above the axis of the neutral moment of the brake pad; and wherein the second arm has an abutment surface directed towards the other edge and which is located below the axis of the neutral moment of the brake pad.

### Brief Description of the Drawings

The present invention will now be described; by way of example, with reference to the accompanying drawings, in which:-
Figure 1 is a side view of a brake pad in accordance with an embodiment of the present invention;
Figure 2 is a top view of the brake pad of figure 1;
Figure 3 is an exploded perspective view of a disc brake assembly including the brake pad of figures 1 and 2;
Figure 4 is a more detailed cross sectional view of the centre brake pad shown in figures 1 to 3 mounted upon the brake pad mounting;
Figure 5 is a top view of the brake pads located on the brake pad mounting and caliper, with the C clamp omitted;
Figure 6 is a schematic graph showing the preferred distribution of the reaction forces taken by the respective abutments of the centre brake pad shown in figures 1 to 5 at different braking torques;
Figure 7 is an exploded perspective view of a caliper and pad assembly of a disc brake showing a brake pad and brake pad mounting in accordance with an alterative embodiment of the present invention; and
Figure 8 is a more detailed cross sectional view of the centre brake pad shown in figure 7 mounted upon the brake pad mounting.

### Description of the Preferred Embodiment

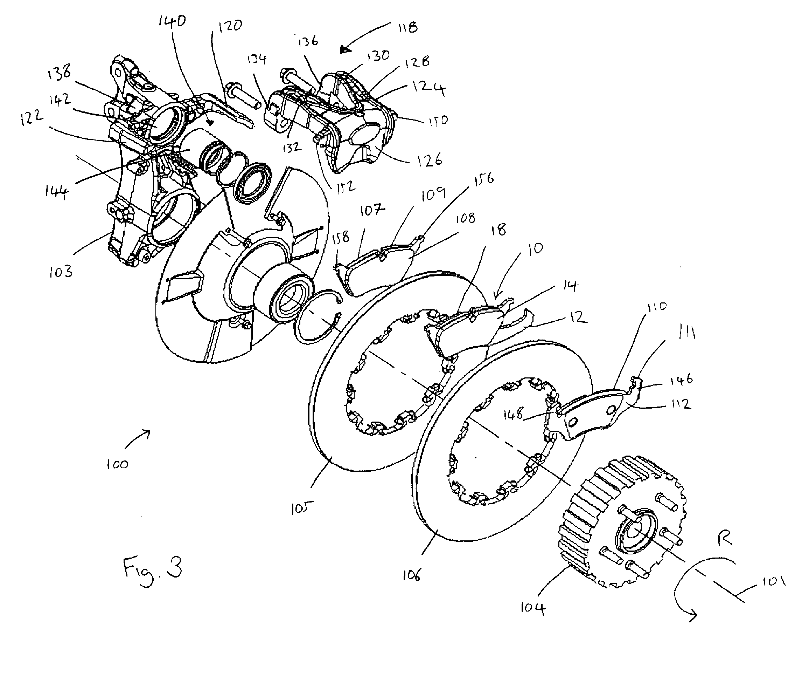

Referring to figure 3, a disc brake 100 is mounted upon a suspension link 103 of a vehicle. The suspension link 103 has a hub 104 mounted for rotation about a central axis 101 thereon. A wheel (not shown) is mounted on the hub 104 in the usual manner. The brake 100 comprises two discs 105,106 which are coaxially mounted on the hub 104 to rotate therewith about the common central axis 101. The discs 105,106 are axially spaced apart and are mounted on the hub 104 for, in use, axial sliding movement so that the discs 105,106 can slide axially on the hub 104 but are rotationally secured to, and rotate with, the hub 104. In use the vehicle is generally driven in a forward direction and the wheel, and so discs 105,106 predominately rotate in a forward direction as indicated by arrow R.

Brake pads 109,10,111 are arranged on opposite sides of the discs 105,106. The brake pads 109,10,111 comprise friction lining material 108,14,18,110 mounted upon supporting backing plates 107,12,112. A double sided centre brake pad 10 is located between the discs 105,106, with two single sided brake pads 109,111, with friction lining material 108,110 mounted on only one side of the respective backing plates 107,112, located on the opposite sides of the respective discs 105,106.

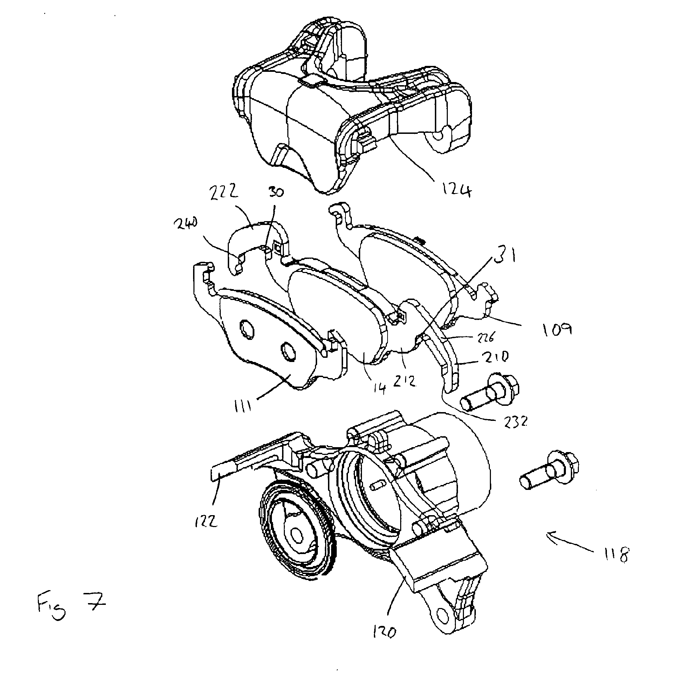

The brake 100 also comprises a caliper assembly 118 fixedly mounted to the suspension link 103, and in this embodiment integral with the suspension link 103. The caliper assembly 8 may however in other embodiments (for example as shown in figure 7) be separate to the suspension link 103 and bolted or otherwise attached thereto. The caliper assembly 118 comprises a pair of parallel circumferentially spaced apart caliper bridge arms 120,122 which are located radially outward of the discs 105,106 and bridge and extend parallel to the main axis 101 over the outer edges of the discs 105,106. The bridge arms 120,122 define and provide a brake pad mounting structure upon which the brake pads 109,10 are axially slidingly, but circumferentially fixedly, mounted as will be described further below. The caliper bridge arms 120,122 comprise and are otherwise known as a torque carrier since they in use react and carry the braking torque. The caliper assembly 118 further includes a C clamp element 124 (otherwise known as a caliper fist) which is similarly located radially outward of the discs 105,106 and bridges and extends parallel to the main axis 101 over the outer edges of the discs 105,106 and to the far side of the disc 106 mounted furthest from the suspension link 103. The C clamp element 124 comprises an end flange 126 that is disposed parallel to an end face of the furthest disc 106. The end flange 126 is connected to a beam section 128 extending over the discs 105,106 and which splits into two arm portions 130,132 each terminating in mounting end flanges 134,136 which are parallel to the end flange 126 and which abut against and are bolted to the main body 138 of the caliper assembly 8 and/or suspension link 103 to fixedly mount the C clamp element 124 to the caliper assembly 118 and/or suspension link 103.

A brake actuator 140 is mounted in a main body 138 of the caliper assembly 118 and comprises a piston 144 mounted in a cylinder 142 defined in the main body 138 of the caliper assembly 118. The actuator 140 is supplied with hydraulic fluid, in use, to move the piston 144 out of the cylinder 142 in an axial direction towards the first inner pad 109. It will however be appreciated that other brake actuator 140 mechanisms, for example electric actuators and/or alterative hydraulic or pneumatic arrangements could be used.

The brake actuator 140 is in use operable to move and press the inner pad 109 in an axial direction into contact and against the first inner disc 105, causing the first inner disc 105 to slide axially along the hub 104 and into contact with the centre brake pad 10, which in turn slides axially into contact with the second outer disc 106 causing the second outer disc 106 to slide axially into contact with the outer brake pad 111. The outer brake pad 111 is restrained from axial movement by abutment against the end flange 126 of the C clamp 124, with the C clamp 124 being hooked over and behind (as compared to the operative axial direction) the main body 138 of the caliper assembly 118. As a result the brake pads 109,10,111 are all pressed against and into frictional engagement with the discs 105,106. By virtue of the friction generated by the contact of the friction lining 108,18,14,110 with the disc surfaces, a braking force and circumferential braking torque on the discs 105,106 is generated which is reacted and resisted by the mounting of the brake pads 109,10,111 and fixed caliper assembly 108.

The brake 100 and brake pads 109,10,111 operate and apply the braking force and torque to the discs 105,106 generally at a single circumferential position around the discs 105,106. As such the brake 100 is classified as a spot type brake. Such spot type brakes, as are typical for motor vehicle use, can be contrasted with the very different full face annular disc brakes which comprise annular discs of friction lining material which contact the full annular face of the brake discs.

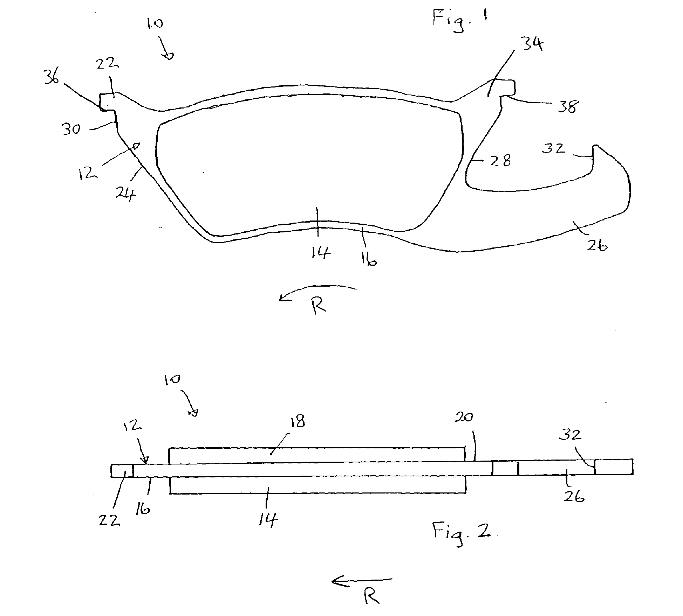

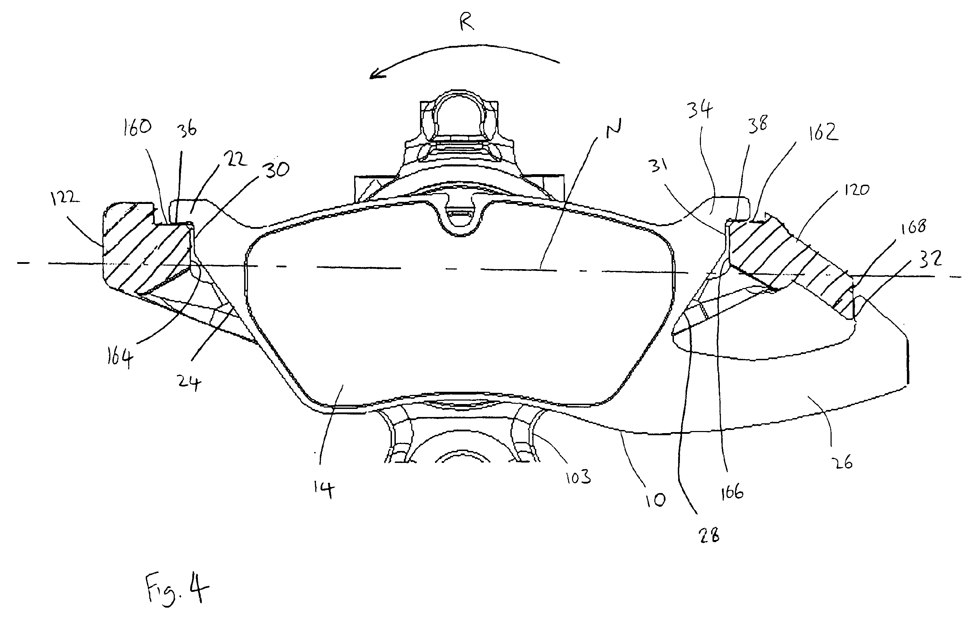

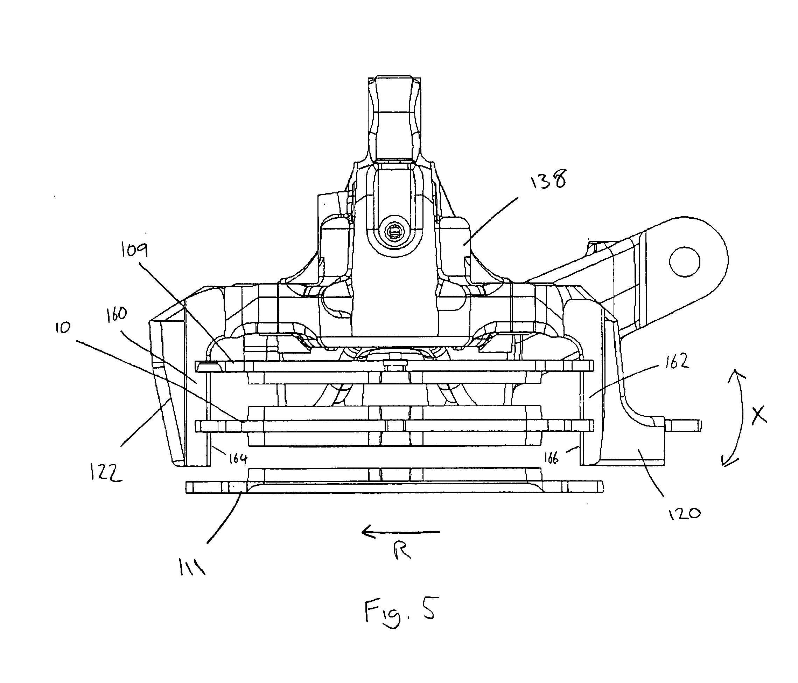

The centre pad 10 is shown on its own in more detail in figures 1 and 2. The centre brake pad 10 includes a backing plate 12. Friction lining material 14 is secured on one side 16 of the backing plate 12. Friction lining material 18 is secured on the other side 20 of the backing plate 12. The backing plate 12 has a first arm 22 extending outwardly from a trailing (with respect to the main direction of rotation R) edge 24 and end of the backing plate 12. The backing plate 12 has a second arm 26 extending outwardly from the other (opposite, leading) edge 28 and end of the backing plate 12. A third arm 34 similar to the first arm 22 also, preferably, extends outwardly from the other (opposite, leading) edge 28 and end of the backing plate 12. The centre pad 10 is mounted and located between the caliper bridge arms 120,122 of the disc brake 100 by these arms 22,26,34 as shown in more detail in figures 4 and 5.

It will be appreciated that reference to leading and trailing edges 28,24 and ends of the brake pad 10 relate to the predominant normal direction of rotation of the disc, shown by arrow R, typically for forward motion of the vehicle.

The centre brake pad 10 when fitted in the disc brake 100 hangs and is located between the caliper bridge arms 120,122. The first and third arms 22,34 have radial mounting surfaces 36,38 which abut against shoulder surfaces 160,162 on the upper portions of the caliper bridge arms 120,122 to thereby radially locate the centre pad 10 in relation to the discs 105,106. The first arm 22 also has an abutment surface 30 directed away from the trailing edge 24 and arranged to abut against a corresponding inner generally circumferentially facing abutment surface 164 of the trailing caliper bridge arm 122. Similarly the third arm 34 has an abutment surface 31 directed away from the leading edge 28 and arranged to abut against a corresponding inner generally circumferentially facing abutment surface 166 of the leading caliper bridge arm 120. The second arm 26 has a distal hook end which defines an abutment surface 32. The abutment surface 32 is directed towards the other edge 28 and arranged to abut against a corresponding outer, generally circumferentially facing, abutment surface 168 of the trailing caliper bridge arm 120. The abutment surfaces 30 and 32 of the first and second arms 22,26 accordingly face in the same generally circumferentially directed direction, corresponding to the predominant forward direction of rotation of the disc 105,106, whilst abutment surface 31 of the third arm 34 faces in the opposite direction. The abutment surfaces 30,32,31, and 164, 166,168 are all parallel to a radius passing through the centre of the pad 10.

In use with the discs 105,106 rotating in the predominant forward direction R when the pads 109,10,111 engage the discs 105,106 to apply a braking torque the abutment surface 30 of first arm 22 engages and is pressed against the corresponding abutment surface 164 of the leading caliper bridge arm 122 to resist and react the circumferential braking torque generated and applied to the discs 105,106 and pad 10 and prevent circumferential movement of the brake pad 10. In addition the abutment surface 32 of the second arm 26 also similarly engages the abutment surface 168 of the trailing caliper bridge arm 120. As a result the braking torque on the pad 10 is resisted and reacted at both the leading and trailing ends of the pad 10, with the load shared between both ends of the pad 10 and caliper bridge arms 120,122. In other words the abutment surface 30 on the first arm 22 acts to push the brake pad 10, and the abutment surface 32 on the second arm 26 acts to pull the brake pad 10. This provides a more stable mounting for the centre pad 10, helps to control flutter of the brake pad 10, and minimizes uneven wearing of the friction lining material 14,18. In particular with both ends of the pad 10 being located and under load, pivoting of the pad 10 about the leading edge (as indicated by arrow X in figure 5). Such pivoting can undesirably lead to taper wear of the friction lining material 14,18, is prevented by abutment of the abutment surface 32 of the second arm 26. Furthermore by sharing the braking torque between the two caliper bridge arms 120,122 the load on each arm 120,122 is reduced so reducing undesirable deflection of the arms 120,122 and/or allowing thin less substantial (and so cheaper and lighter) construction of the caliper bridge arms 120,122.

With the discs 105,106 rotating in the less common reverse direction (i.e. opposite to direction R), when the pads 109,10,111 engage the discs 105,106 to apply a reverse braking torque the abutment surface 31 of third arm 34 alone engages and is pressed against the corresponding abutment surface 166 of the leading caliper bridge arm 122 (now trailing arm with respect to the reverse rotational direction) to resist and react the circumferential braking torque generated and applied to the discs 105,106 and pad 10 and prevent circumferential movement of the brake pad 10. As such under braking of the discs 105,106 rotating in the reverse direction the pad 10 is only resisted and reacted at one circumferential end of the pad 10. However this is not generally a concern since braking rotation of the discs 105,106 rotating in the reverse direction is less common than braking rotation in the forward direction R, and the braking torques and loads are generally less with the vehicle speeds in reverse generally being much lower. In alterative embodiments however the pad 10 could be modified to be double acting, and for example include a fourth arm, similar to the second arm 26 and extending from the leading edge 24 of the pad 10, with a fourth abutment surface to similarly engage and abut a corresponding abutment surface on the outer circumferentially facing surface of the leading caliper bridge 120 when the discs are rotating in the reverse direction.

As shown in figure 4, the first abutment surface 30 is located, (and in particular centered), above the axis N of neutral moment of the pad 10 such that it provides a reaction force centered above the neutral axis N. The second abutment surface 32 of the second arm 26 is located below the axis N of the neutral moment of the brake pad 10 such that it provides a reaction force centered below the neutral axis N. The axis of the neutral moment N of the brake pad 10, otherwise known as the neutral moment axis, is an axis N on which the braking torque on the brake pad 10 can be resolved with no rotating moment on the pad 10. In other words the neutral axis N is the tangential axis on which a tangential resisting force applied to the pad 10 would resist the braking torque on the pad without generating any rotating moment on the pad 10.

By locating the first abutment surface 30 which locates the trailing end of the pad 10 above the neutral axis N , and the second abutment surface 32 of the second arm 26 which locates the trailing edge of the pad 10, the reaction forces generated at these abutment surfaces 30,32 on the pad 10 during braking of the discs 105,106 when rotating in a forward direction R give rise to resulting moments of the pad 10 which urge the pad 10 radially inwardly. As a result the radial mounting surfaces 36,38 of the first and third arms 22,34 are urged against the shoulder surfaces 160,162 on the upper portions of the caliper bridge arms 120,122 thereby providing a more stable and secure location of the pad 10 on its mounting and reducing flutter and tilting of the pad 10 in a radial direction, as well as resisting any tendency of the engagement of the disc 105,106 with the pad 10 to centrifugally urge the pad 10 radially outwards.

It should be noted that the abutment surface 30,32,31, and radial mounting surfaces 36,38 of the pad 10 and of corresponding surfaces 164,168,166,160,162 of the caliper bridge arms 120,122 and indeed the caliper bridge arms 120,122 are located radially outside of the outer periphery of discs 105,106. This necessary in order to allow free sliding of the discs 105,106.

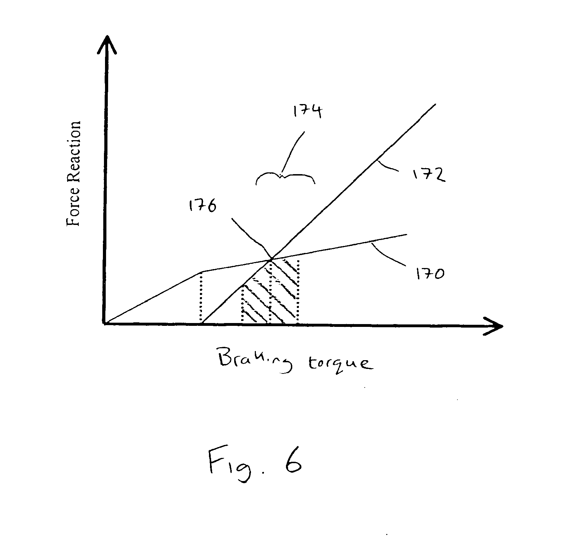

In the preferred arrangement the second,'pull' abutment surface 32 at the leading end of the pad 10 is arranged to initially provide the majority of the reaction force reacting and resisting the braking torque. This ensures, by virtue of the second abutment surface 32 at the leading end of the pad 10 being located below the neutral axis N, that the pad 10 is urged radially inwards and onto the caliper bridge arms 120,122. At higher braking torques the first abutment surface 30 then begins to provide a proportion of the reaction force reacting and resisting the braking torque, with at the typical usual braking torque the reaction force reacting and resisting the braking torque being equally shared between the abutment surfaces 32,30 and caliper arms 120,122. This is shown in figure 6 which plots the typical reaction force on each respective abutment surfaces 30,32 and arms 120,122 against total braking torque. The reaction force on the second abutment surface 32 and trailing caliper arms 120 is shown as line 170, and that on the first abutment surface 30 and leading caliper arm 122 is shown as line 172. The typical operating braking torque region is shown as area 174, and the typical mean braking torque where the reaction forces on each abutment surface 30,32 and caliper arms 120,122 are arranged to be equal is marked as point 176.

Such an arrangement and distribution of the reaction forces in use can be achieved, for example by providing a larger clearance between the abutment surfaces 30 and 164 than between abutment surfaces 32 and 168 such that abutment surface 32 and 168 abut and engage before surface 30 and 164. Alternatively the stiffness of the caliper bridge arms 120,122 and/or of the first and second arms 22,26 can be adjusted such that they differentially deflect under load altering the abutment and reaction forces on the respective ends of the pad. 10.

In contrast to the centre pad 10 the inner and outer brake pads 109,111 are generally conventionally mounted upon the caliper assembly 118. The outer bake pad 111 is mounted against the end flange 126 of the C clamp 124, in this embodiment, by a pair of underslung arms 146,148 which clip over corresponding mounting ears 150,152 projecting from the C clamp 124. The inner brake pad 109 is axially slidably mounted upon the caliper bridge arms 120,122 by a pair of projecting arms or lugs 156,158 projecting laterally from either end of the brake pad 109 and at the upper radially outward edge of the brake pad 109. These arms 156,158 engage and slidingly hang upon the shoulder surfaces 160,162 on the upper portions of the caliper bridge arms 120,122 to thereby radially locate the centre pad 10 in relation to the discs 105,106. The braking torque on both the inner and outer pads 109,11 is resist by abutment of only one end of the respective pads with there corresponding mounting. In other embodiments the inner and outer pads could be mounted to the caliper assembly 118 in a similar manner to the centre pad 10 and be of a similar configuration. However such more sophisticated mounting of the inner and outer pads 109,111 is not generally required since they are additionally supported and kept in position by abutment against the piston 144 and caliper end flange 126 of the C clamp, o otherwise supported.

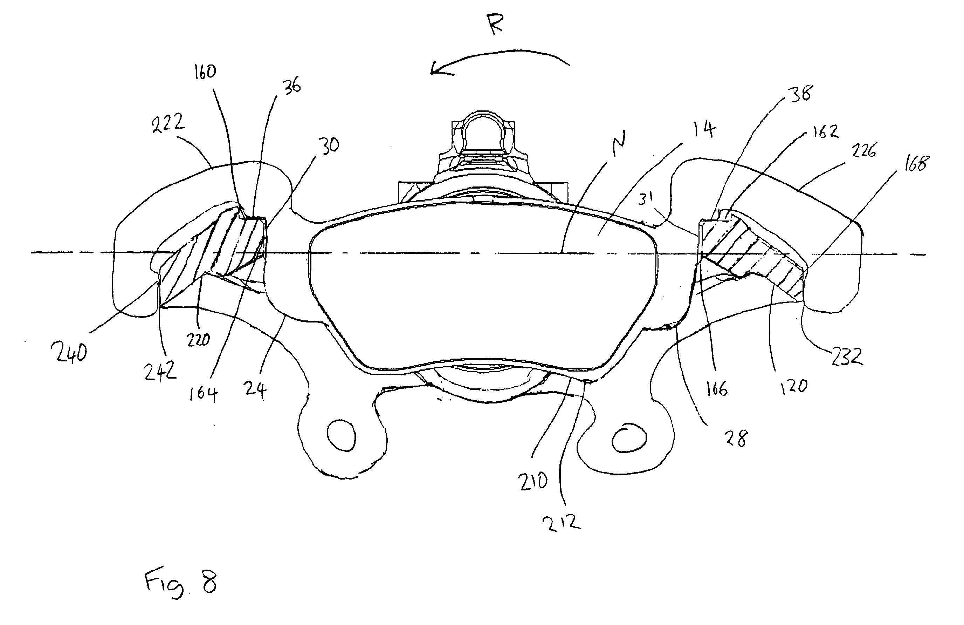

Referring now to figures 7 and 8, an alternative caliper assembly 118 and brake pad mounting arrangement is shown. This is generally similar to the previously described and shown embodiment, and like reference numerals will be used for like elements. In this arrangement the caliper assembly 118 comprises a separate assembly that is bolted to the suspension arm rather than being integral therewith. The inner and outer brake pads 109,111 and identical to those of the previous embodiments and are similarly mounted on the caliper assembly. The centre pad 210 and leading caliper bridge arm 220 however differ from the centre pad 10 and leading caliper bridge arm 122 of the previous embodiment.

The centre brake pad 210 includes a backing plate 212. Friction lining material 14, 18 is secured on both opposite sides the backing plate 12. The backing plate 12 has a first arm 202 located towards the upper portion of the pad 210 and extending outwardly from a leading (with respect to the main direction of rotation R) edge 24 of the backing plate 12. The backing plate 12 also has a second arm 226 located towards the upper portion of the pad 210 and extending outwardly from the other (opposite, trailing) edge 28 of the backing plate 12. The centre brake pad 210 when fitted in the disc brake 100 hangs and is located between the caliper bridge arms 120, 220. The first and second arms 222,226 have radial mounting surfaces 36,38 upon their lower edges which abut against shoulder surfaces 160,162 on the upper portions of the caliper bridge arms 120,122 to thereby radially locate the centre pad 210 in relation to the discs 105,106. The first arm 22 also has an inner circumferential abutment surface 30 directed away from the trailing edge 24 and end of the pad 210 and arranged to abut against a corresponding inner generally circumferentially facing abutment surface 164 of the leading caliper bridge arm 220. Similarly the second arm 226 has an inner circumferential abutment surface 31 directed away from the leading edge 28 and end of the pad 210 and arranged to abut against a corresponding inner generally circumferentially facing abutment surface 166 of the trailing caliper bridge arm 120. The distal ends of the first and second arms 222,226 hang down lower than the remainder of the arms 222,226, forming distal hook ends of the arm which define outer generally circumferentially facing abutment surfaces 240 and 232. The outer generally circumferentially facing abutment surface 240 of the first arm 222 is directed towards the leading edge 24, and towards the inner circumferential abutment surface 30, and arranged to abut against a corresponding outer generally circumferentially facing abutment surface 242 of the trailing caliper bridge arm 220. The outer generally circumferentially facing abutment surface 232 of the second arm 222 is directed towards the leading edge 28 and end of the pad 210, and towards the inner circumferential abutment surface 31, and arranged to abut against a corresponding outer generally circumferentially facing abutment surface 168 of the leading caliper bridge arm 120. The circumferential facing abutment surfaces 30,32,31,240 and 164,166,168, 242 are all parallel to a radius passing through the centre of the pad 10.

The inner circumferential abutment surface 30 of the first arm 222, and the outer circumferential abutment surface 232 of the second arm face in the same generally circumferentially direction, corresponding to the predominant forward direction of rotation of the disc 105,106. These circumferential abutment surfaces 30 and 232 and their engagement with their corresponding surfaces 164 and 168 resist and react, in use, the braking torque on the brake pad when braking rotations of the discs 105,106 in a forward direction. Similarly the inner circumferential abutment surface 31 of the second arm 226, and the outer circumferential abutment surface 240 of the first arm 222 accordingly face in the same generally circumferentially directed direction, corresponding to the predominant reverse direction of rotation of the disc 105,106. These circumferential abutment surfaces 31 and 240 and their engagement with their corresponding surface 166 and 242 resist and react, in use, the braking torque on the brake pad 210 when braking rotations of the discs 105,106 in a forward direction. The inner circumferential abutment surfaces 30 and 31, and the reaction forces centered on these surfaces on the pad, are located above the neutral axis N, whilst the outer circumferential abutment surfaces 232,and 242, and the reaction forces centered on these surfaces on the pad, are located below the neutral axis N.

Accordingly under braking, the braking torque is reacted, as in the previous embodiments, at both ends of the pad 210 both above and below the neutral axis N thereby providing a more stable location of the pad. In this case however the pad 210 and its mounting is also double acting with the braking torque is reacted at both ends of the pad 210 during braking of discs 105,106 rotating in either direction.

It will be appreciated that there are many modifications to the above described embodiments. For example whilst the caliper assembly is described and shown as comprising a separate C clamp 124 separate to the caliper bridge arms 120,122 they could be integrated together as a single element. In addition whilst in the above described and illustrated embodiments the disc brake 100 comprises two disc 105,106, it will be appreciated that in other embodiments there may be further axially slidable discs, with further pads located between the respective discs.

## Claims

1. A brake pad (10) for a disc brake (100), the brake pad (10) having first and second abutment surfaces (30.32) disposed toward opposite respective ends of the brake pad (10) for mounting the brake pad (10) in the disc brake (100), the first and second operative abutment surfaces (30,32) of the brake pad (10) facing in the same direction (R) and are adapted to, in use, both react a braking torque generated during braking of a disc (105,106) of the disc brake (100) rotating in a first direction (R),
**characterized in that** the brake pad (10) has a neutral moment axis (N) on which the braking torque on the brake pad (10) can be resolved with no rotating moment on the pad, and wherein the first abutment surface (30) is centered above the neutral moment axis (N) and the second abutment surface (32) is centered below the neutral moment axis (N).

2. A brake pad (10) as claimed in claim 1 in which the first and second abutment surfaces (30, 32) are located such that when the brake pad (10) is installed in the disc brake (100) they are located radially outside of an outer periphery of the discs (105, 106).

3. A brake pad (10) as claimed in claim 1 or 2 in which the first and second abutment surfaces (30,32) comprise planar abutment surfaces.

4. A brake pad (10) as claimed in claim 3 in which the first and seconde abutment surfaces (30, 32) are parallel to each other.

5. A brake pad (10) as claimed in claim 4 in which the first and second abutment surface (30,32) are disposed so as to be parallel to a radius of the disc (105,106) of the disc brake (100) when the brake pad (10) is installed in the disc brake (100).

6. A brake pad (10) as claimed in any preceding claim wherein brake pad (10) is for use in a disc brake (100) in which the disc (105,106), in use, predominantly rotates in the first direction (R), and the pad (10) has a leading end and a trailing end with respect to the first direction of rotation (R).

7. A brake pad (10) as claimed in claim 6 in which the first and second abutment surfaces (30,32) of the brake pad (10) face in the first direction of rotation (R).

8. A brake pad (10) as claimed in claim 6 or 7 in which the first abutment surface (30) of the pad (10)is located towards the trailing end of the brake pad (10) and the second abutment surface (32) of the pad (10) is located towards the leading end of the pad (10).

9. A brake pad (10) as claimed in one of claims 6 to 8 in which the pad (10) has a first arm (26) which extends from the end of the pad (10) and has a distal hook end which defines the second abutment surface (32).

10. A brake pad (10) as claimed in one of claims 6 to 9 in which the brake pad (10) further comprises a third abutment surface (31) facing in the opposite direction to the first and second abutment surfaces (30,32) to in use react a braking torque acting on the brake pad (10) generated during braking of the disc rotating in a second direction opposite to the first direction (R).

11. A brake pad (10) as claimed in claim 10 in which the third abutment surface (31) of the pad (10) is located towards the leading end of the brake pad (10).

12. A brake pad (210) as claimed in claim 10 or 11 in which the brake pad (210) further comprises a fourth abutment surface (240) facing in the same direction as third abutment surface (31), to, in use, react the braking torque acting, on the brake pad (210), and wherein the third abutment surface (31) is centered above the neutral moment axis (N) and the fourth abutment surface (240) is centered below the neutral moment axis (N).

13. A brake pad (210) as claimed in claim 12 in which the pad (210) has a second arm (222) which extends from the end of the pad (210) and has a distal hook end which defines the fourth abutment surface (242).

14. A brake pad (10,210) as claimed in any one of claims 1 to 8 comprising a backing plate (12) having friction lining material (14) on one side (16) thereof and friction lining material (18) on the other side (20) thereof; wherein the backing plate (12) has a first arm (22) extending outwardly from one edge (24) of the backing plate (12); and a second arm (26) extending outwardly from the other edge (28) of the backing plate (12); wherein the first arm (22) includes the first abutment surface (30) directed away from the one edge (24) and which is located above the neutral moment axis (N); and wherein the second arm (26) includes the second abutment surface (32) directed towards the other edge (28) and which is located below the neutral moment axis (N).

15. A disc brake (100) comprising:
a rotatable disc (105,106);
at least a pair of brake pads (109,10,111) arranged to, in use, frictionally engage opposite sides of the disc (105,106) and generate a braking torque on the disc (105,106), at least one of the pair of brake pads (10) having first and second abutment surfaces (30,32) disposed toward opposite respective ends of the brake pad (10) for mounting the brake pad (10);
a fixed brake pad mounting (120,122) located radially outward of the discs (105,106) and bridging me outer edges of the discs (105,106) and upon which at least one of the brake pads (10) is mounted, the fixed brake pad mounting (120,122) comprising first and second fixed brake pad mounting abutment surfaces (164,168) against which the first and second abutment surfaces (30,32) of the brake pad (10) abut to, in use, react a braking torque acting on the brake pad (10) generated during braking of the rotatable disc (105,106); wherein at least one of the pair of brake pads (109,10,111) comprises a brake pad (109,10,111) of any one of claims 1 to 14.

16. A disc brake (100) as claimed in claim 15 in which the brake pad (100) comprises a third abutment surface (31) facing in the opposite direction to the first and second abutment surfaces (30,32), and the fixed brake pad mounting (120) further comprises a third fixed brake pad mounting abutment surface (162) against which the third abutment surface (31) of the brake pad (10) abuts to in use react a braking torque acting on the brake pad (10) generated during braking of the rotatable disc (105,106) rotating in a second direction opposite to the first direction (R).

17. A disc brake (100) as claimed in claim 16 in which the brake pad (210) comprises a fourth abutment surface (240) facing in the same direction as third abutment surface (31), and the fixed brake pad mounting (122) further comprises a fourth fixed brake pad mounting abutment surface (242) against which the fourth abutment surface (240) of the brake pad (210) abuts to, in use, react the braking torque acting on the brake pad (210), and wherein the third abutment surface (31) is centered above the neutral moment axis (N) and the fourth abutment surface (240) is centered below the neutral moment axis (N).

18. A disc brake (100) as claimed in any one of claims 15 to 17 wherein the fixed pad mounting (120,122) and brake pad (10) are adapted such that, in use, the braking torque reacted by the first and second abutment surfaces (30,32) is shared between the first and second abutment surfaces (30,32).

19. A disc brake (100) as claimed in any one of claims 15 to 18 wherein the fixed pad mounting (120,122) and brake pad (10) are adapted such that in use the braking torque is initially predominantly reacted by the second abutment surface (32) of the pad (10) and second fixed mounting abutment surface (164).

20. A disc brake (100) as claimed in any one of claims 15 to 19 comprising at least two rotatable discs (105,106) and the brake pad (10) comprises a centre pad (10) located between the two rotatable discs (105,106).

## Patentansprüche

1. Bremsbelag (10) für eine Scheibenbremse (100), wobei der Bremsbelag (10) an einander gegenüberliegenden jeweiligen Enden des Bremsbelags (10) erste und zweite Stirnflächen (30, 32) zur Montage des Bremsbelags (10) an der Scheibenbremse (100) aufweist, und die erste und zweite wirkende Stirnfläche (30, 32) des Bremsbelags (10) in die gleiche Richtung (R) weisen und dazu adaptiert sind, im Gebrauch ein beim Abbremsen einer Scheibe (105, 106) der sich in eine erste Richtung (R) drehenden Scheibenbremse (100) erzeugtes Bremsmoment auszuüben; **dadurch** charakterisiert, dass der Bremsbelag (10) eine neutrale Momentachse (N) aufweist, auf der das Bremsmoment auf dem Bremsbelag (10) ohne Drehbewegung auf dem Belag aufgelöst werden kann, und wobei die erste Stirnflächen (30) über der neutralen Momentachse (N) mittig angeordnet ist und die zweite Stirnflächen (32) unter der neutralen Momentachse (N) mittig angeordnet ist.

2. Bremsbelag (10) gemäß Anspruch 1, wobei die erste und zweite Stirnfläche (30, 32) solchermaßen angeordnet sind, dass sie radial außen von einer äußeren Peripherie der Scheiben (105, 106) befindlich sind, wenn der Bremsbelag (10) in der Scheibenbremse (100) installiert ist.

3. Bremsbelag (10) gemäß Anspruch 1 oder 2, wobei die erste und zweite Stirnflächen (30, 32) ebene Stirnflächen aufweisen.

4. Bremsbelag (10) gemäß Anspruch 3, wobei die erste und zweite Stirnfläche (30, 32) parallel zueinander sind.

5. Bremsbelag (10) gemäß Anspruch 4, wobei die erste und zweite Stirnfläche (30, 32) so angeordnet sind, dass sie parallel zu einem Radius der Scheibe (105, 106) der Scheibenbremse (100) sind, wenn der Bremsbelag (10) in der Scheibenbremse (100) installiert ist.

6. Bremsbelag (10) gemäß einem beliebigen der vorstehenden Ansprüche, wobei der Bremsbelag (10) zum Gebrauch in einer Scheibenbremse (100) bestimmt ist, bei welcher sich die Scheibe (105, 106) im Gebrauch vorherrschend in die erste Richtung (R) dreht, und der Bremsbelag (10) hinsichtlich der ersten Drehrichtung (R) einen Vorder- und eine Hinterkante aufweist.

7. Bremsbelag (10) gemäß Anspruch 6, wobei die erste und die zweite Stirnfläche (30, 32) des Bremsbelags (10) in die erste Drehrichtung (R) weisen.

8. Bremsbelag (10) gemäß Anspruch 6 oder 7, wobei die erste Stirnfläche (30) des Bremsbelags (10) nahe der Hinterkante des Bremsbelags (10) und die zweite Stirnfläche (32) nahe der Vorderkante des Bremsbelags (10) befindlich ist.

9. Bremsbelag (10) gemäß Anspruch 6 bis 8, wobei der Bremsbelag (10) einen ersten Arm (26) aufweist, der sich von der Kante des Bremsbelags (10) erstreckt und am anderen Ende hakenförmig ist, wodurch die zweite Stirnfläche (32) gebildet wird.

10. Bremsbelag (10) gemäß Anspruch 6 bis 9, wobei der Bremsbelag (10) des Weiteren eine dritte, in die der ersten und zweiten Stirnfläche (30, 32) gegenüber liegende Richtung weisende Stirnfläche (31) aufweist, um im Gebrauch ein durch das Abbremsen der sich in eine der ersten Richtung entgegengesetzten zweiten Richtung (R) drehenden Scheibe erzeugtes Bremsmoment auf den Bremsbelag (10) auszuüben.

11. Bremsbelag (10) gemäß Anspruch 10, wobei die dritte Stirnfläche (31) des Bremsbelags (10) nahe der Vorderkante des Bremsbelags (10) befindlich ist.

12. Bremsbelag (210) gemäß Anspruch 10 oder 11, wobei der Bremsbelag (210) des Weiteren eine vierte, in die gleiche Richtung wie die dritte Stirnfläche (31) weisende Stirnfläche (240) aufweist, um im Gebrauch ein Bremsmoment auf den Bremsbelag (210) auszuüben, und wobei die dritte Stirnfläche (31) über der neutralen Momentachse (N) und die vierte Stirnfläche (240) unter der neutralen Momentachse (N) mittig angeordnet ist.

13. Bremsbelag (210) gemäß Anspruch 12, wobei der Bremsbelag (210) einen zweiten Arm (222) aufweist, der sich von der Kante des Bremsbelags (210) erstreckt und am anderen Ende hakenförmig ist, wodurch die vierte Stirnfläche (242) gebildet wird.

14. Bremsbelag (10, 210) gemäß einem beliebigen der Ansprüche 1 bis 8, welcher eine auf einer Seite (12) und auf der anderen Seite (16) mit einem Reibungsmaterial beschichtete Rückplatte (12) umfasst; wobei die Rückplatte (12) einen sich von einer Kante (24) der Rückplatte (12) nach außen erstreckenden ersten Arm (22) und einen sich von der anderen Kante (28) der Rückplatte (12) nach außen erstreckenden zweiten Arm (26) aufweist; wobei der erste Arm (22) die erste, von der einen Kante (24) weg weisende Stirnfläche (30) beinhaltet, und wobei der zweite Arm (26) eine zur äußeren Kante (28) weisende Stirnfläche (32) beinhaltet, die sich unter der neutralen Momentachse (N) befindet.

15. Scheibenbremse (100), umfassend:
Drehbare Scheibe (105, 106);
mindestens ein Paar Bremsbeläge (109, 10, 111), solchermaßen angeordnet, dass sie im Gebrauch Reibung auf gegenüberliegende Seiten der Scheibe (105, 106) ausüben und ein Bremsmoment auf die Scheibe (105, 106) erzeugen, und mindestens eines der Bremsbelagpaare (10) an den jeweils gegenüberliegenden Enden des Bremsbelags (12) befindliche erste und zweite Stirnflächen (30, 32) zur Montage des Bremsbelags (10) aufweist;
radial nach von den Scheiben (105, 106) nach außen befindliche und die Außenkanten der Scheiben (105, 106) überbrückende fest angebrachte Bremsbelaghalterung (20, 122), an welcher mindestens einer der Bremsbeläge (10) montiert ist, wobei die fest angebrachte Bremsbelaghalterung (20, 122) wiederum erste und zweite Stirnflächen (164, 168) aufweist, auf die die erste und zweite Stirnfläche (30, 32) des Bremsbelags (10) treffen, und in Gebrauch ein beim Abbremsen der drehbaren Scheibe (105, 106) erzeugtes Bremsmoment auf den Bremsbelag (10) ausüben, wobei mindestens ein Paar der Bremsbeläge (109, 10, 111) einen Bremsbelag (109, 10, 111) gemäß einem der Ansprüche 1 bis 14 umfasst.

16. Scheibenbremse (100) gemäß Anspruch 15, wobei der Bremsbelag (100) des Weiteren eine dritte, in die der ersten und zweiten Stirnfläche (30, 32) gegenüber liegende Richtung weisende Stirnfläche (31) aufweist, und die fest angebrachte Bremsbelaghalterung (120) des Weiteren eine dritte Stirnfläche (162) aufweist, auf die die erste und zweite Stirnfläche (30, 32) des Bremsbelags (10) treffen, um im Gebrauch ein durch das Abbremsen der sich in eine der ersten Richtung entgegengesetzten zweiten Richtung (R) drehenden Scheibe erzeugtes Bremsmoment auf den Bremsbelag (10) auszuüben.

17. Scheibenbremse (100) gemäß Anspruch 16, wobei der Bremsbelag (210) des Weiteren eine in die gleiche Richtung wie die dritte Stirnfläche (31) weisende vierte Stirnfläche (240) aufweist, und die fest angebrachte Bremsbelaghalterung (122) des Weiteren eine vierte Stirnfläche (242) aufweist, auf die die vierte Stirnfläche (240) des Bremsbelags (210) trifft, um im Gebrauch ein Bremsmoment auf den Bremsbelag (10) auszuüben, wobei die dritte Stirnfläche (31) über der neutralen Momentachse (N) und die vierte Stirnfläche (240) unter der neutralen Momentachse (N) mittig angeordnet ist.

18. Scheibenbremse (100) gemäß einem beliebigen der vorstehenden Ansprüche 15 bis 17, wobei die fest angebrachte Bremsbelaghalterung (120, 122) und der Bremsbelag (10) solchermaßen adaptiert sind, dass im Gebrauch das von der ersten und zweiten Stirnfläche (30, 32) erzeugte Bremsmoment zwischen der ersten und zweiten Stirnfläche (30, 32) verteilt wird.

19. Scheibenbremse (100) gemäß einem beliebigen der vorstehenden Ansprüche 15 bis 18, wobei die fest angebrachte Bremsbelaghalterung (120, 122) und der Bremsbelag (10) solchermaßen adaptiert sind, dass im Gebrauch das Bremsmoment eingangs vorherrschend von der zweiten Stirnfläche (32) des Bremsbelags (10) und der zweiten Stirnfläche (164) der fest angebrachten Bremsbelaghalterung ausgeübt wird.

20. Scheibenbremse (100) gemäß einem beliebigen der vorstehenden Ansprüche 15 bis 19, mindestens zwei drehbare Scheiben (105, 106) umfassend, wobei der Bremsbelag (10) ein zwischen den beiden drehbaren Scheiben (105, 106) befindliches Mittelpolster (10) umfasst.

## Revendications

1. Patin de frein (10) pour un frein à disque (10), le patin de frein (10) ayant une première et une seconde surface de butée (30, 32) disposées vers des extrémités respectives opposées du patin de frein (10) pour monter le patin de frein (10) dans le frein à disque (100), la première et la seconde surface de butée fonctionnelles (30, 32) du patin de frein (10) faisant face dans la même direction (R) et étant adaptées, en utilisation, pour réagir toutes les deux à un couple de freinage généré pendant le freinage d'un disque (105, 106) du frein à disque (100) qui tourne dans une première direction (R) ;
**caractérisé en ce que** le patin de frein (10) présente un axe de couple neutre (N) sur lequel le couple de freinage sur le patin de frein (10) peut être résolu sans couple de rotation sur le patin, et dans lequel la première surface de butée (30) est centrée au-dessus de l'axe de couple neutre (N) et la seconde surface de butée (32) est centrée au-dessous de l'axe de couple neutre (N).

2. Patin de frein (10) selon la revendication 1, dans lequel la première et la seconde surface de butée (30, 32) sont placées de telle façon que lorsque le patin de frein (10) est installé dans le frein à disque (100) elles sont placées radialement à l'extérieur d'une périphérie extérieure des disques (105, 106).

3. Patin de frein (10) selon la revendication 1 ou 2, dans lequel la première et la seconde surface de butée (30, 32) comprennent des surfaces de butée planes.

4. Patin de frein (10) selon la revendication 3, dans lequel la première et la seconde surface de butée (30, 32) sont parallèles l'une à l'autre.

5. Patin de frein (10) selon la revendication 4, dans lequel la première et la seconde surface de butée (30, 32) sont disposées de manière à être parallèles à un rayon du disque (105, 106) du frein à disque (100) quand le patin de frein (10) est installé dans le frein à disque (100).

6. Patin de frein (10) selon l'une quelconque des revendications précédentes, dans lequel le patin de frein (10) est destiné à être utilisé dans un frein à disque (100) dans lequel le disque (105,106) tourne, en utilisation, de façon prédominante dans la première direction (R), et le patin (10) possède une extrémité de tête et une extrémité de queue par rapport à la première direction de rotation (R).

7. Patin de frein (10) selon la revendication 6, dans lequel la première et la seconde surface de butée (30, 32) du patin de frein (10) font face dans la première direction de rotation (R).

8. Patin de frein (10) selon la revendication 6 ou 7, dans lequel la première surface de butée (30) du patin (10) est située vers l'extrémité de queue du patin de frein (10) et la seconde surface de butée (32) du patin (10) est située vers l'extrémité de tête du patin (10).

9. Patin de frein (10) selon l'une des revendications 6 à 8, dans lequel le patin (10) possède un premier bras (26) qui s'étend depuis l'extrémité du patin (10) et présente une extrémité distale en crochet qui définit la seconde surface de butée (32).

10. Patin de frein (10) selon l'une des revendications 6 à 9, dans lequel le patin de frein (10) comprend en outre une troisième surface de butée (31) qui fait face dans la direction opposée à la première et la seconde surface de butée (30, 32) pour réagir, en utilisation, à un couple de freinage agissant sur le patin de frein (10) généré pendant le freinage du disque qui tourne dans une seconde direction opposée à la première direction (R).

11. Patin de frein (10) selon la revendication 10, dans lequel la troisième surface de butée (31) du patin (10) est située vers l'extrémité de queue du patin de frein (10).

12. Patin de frein (210) selon la revendication 10 ou 11, dans lequel le patin de frein (210) comprend en outre une quatrième surface de butée (240) qui fait face dans la même direction que la troisième surface de butée (31) pour réagir, en utilisation, au couple de freinage qui agit sur le patin de frein (210), et dans lequel la troisième surface de butée (31) est centrée au-dessus de l'axe de couple neutre (N) et la quatrième surface de butée (240) est centrée au-dessous de l'axe de couple neutre (N).

13. Patin de frein (210) selon la revendication 12, dans lequel le patin (210) possède un second bras (222) qui s'étend depuis l'extrémité du patin (210) et qui présente une extrémité distale en crochet qui définit la quatrième surface de butée (242).

14. Patin de frein (10, 210) selon l'une quelconque des revendications 1 à 8, comprenant une plaque support (12) présentant un matériau de doublage à friction (14) sur un côté (16) et un matériau de doublage à friction (18) sur l'autre côté (20) ; ladite plaque support (12) possède un premier bras (22) qui s'étend vers l'extérieur depuis un bord (24) de la plaque support (12), et un second bras (26) s'étendant vers l'extérieur depuis l'autre bord (28) de la plaque support (12) ; dans lequel le premier bras inclut la première surface de butée (30) dirigée en éloignement depuis le premier bord (24) et qui est située au-dessus de l'axe de couple neutre (N) ; et dans lequel le second bras (26) inclut la seconde surface de butée (32) dirigée vers l'autre bord (28) et qui est située au-dessous de l'axe de couple neutre (N).

15. Frein à disque (100), comprenant :
un disque rotatif (105, 106) ;
au moins une paire de patins de freins (109, 10, 111) agencés pour, en utilisation, engager en friction des côtés opposés du disque (105, 106) et générer un couple de freinage sur le disque (105, 106), l'un au moins de la paire de patins de frein (10) ayant une première et une seconde surface de butée (30, 32) disposées vers des extrémités respectives opposées du patin de frein (10) pour monter le patin de frein (10) ;
une monture fixe (120, 122) pour patin de frein, située radialement à l'extérieur des disques (105, 106) et coiffant les bords extérieurs des disques (105, 106) et sur laquelle l'un au moins des patins de frein (10) est monté, la monture fixe (120, 122) pour patin de frein comprenant une première et une seconde surface de butée de montage fixe (164, 168) pour patin de frein contre lesquelles la première et la seconde surface de butée (30, 32) du patin de frein (10) viennent buter pour, en utilisation, à réagir à un couple de freinage agissant sur le patin de frein (10) et généré pendant le freinage du disque rotatif (105, 106) ;
dans lequel l'un au moins de la paire de patins de frein (109, 10, 111) comprend un patin de frein (109, 10, 111) selon l'une quelconque des revendications 1 à 14.

16. Frein à disque (100) selon la revendication 15, dans lequel le patin de frein (100) comprend une troisième surface de butée (31) qui fait face dans la direction opposée à la première et la seconde surface de butée (30, 32), et la monture fixe (120) pour patin de frein comprend encore une troisième surface de butée de montage fixe (162) pour patin de frein contre laquelle la troisième surface de butée (31) du patin de frein (10) vient un butée pour, en utilisation, réagir à un couple de freinage régissant sur le patin de frein (10) et généré pendant le freinage du disque rotatif (105, 106) qui tourne dans une seconde direction opposée à la première direction (R).

17. Frein à disque (100) selon la revendication 16, dans lequel le patin de frein (210) comprend une quatrième surface de butée (240) qui fait face dans la même direction que la troisième surface de butée (31), et la monture fixe (122) pour patin de frein comprend encore une quatrième surface de butée de montage fixe (242) pour patin de frein, contre laquelle la quatrième surface de butée (240) du patin de frein (218) vient buter pour, en utilisation, réagir au couple de freinage agissant sur le patin de frein (210), et dans lequel la troisième surface de butée (31) est centrée au-dessus de l'axe de couple neutre (N) et la quatrième surface de butée (240) est centrée au-dessous de l'axe de couple neutre (N).

18. Frein à disque (100) selon l'une quelconque des revendications 15 à 17, dans lequel la monture fixe (120, 122) pour patin de frein et le patin de frein (10) sont adaptés de telle manière que, en utilisation, le couple de freinage auquel la première et la seconde surface de butée (30, 32) réagissent est partagé entre la première et la seconde surface de butée (30, 32).

19. Frein à disque (100) selon l'une quelconque des revendications 15 à 18, dans lequel la monture fixe (120, 122) pour patin de frein et le patin de frein (10) sont adaptés de telle manière que, en utilisation, le couple de freinage reçoit initialement une réaction prédominante de la part de la seconde surface de butée (32) du patin de frein (10) et de la part de la seconde surface de butée de montage fixe (164).

20. Frein à disque (100) selon l'une quelconque des revendications 15 à 19, comprenant au moins deux disques rotatifs (105, 106), et le patin de frein (10) comprend un patin central (10) situé entre les deux disques rotatifs (105, 106).
